# EUROPEAN PATENT SPECIFICATION

(11) **EP 0 507 151 B1**
(45) Date of publication and mention of the grant of the patent: **24.07.1996**
(21) Application number: 92104726.2
(22) Date of filing: 18.03.1992
(51) Int. Cl.: B60H 1/00, F24F 7/06

(54) **Means for conditioning the air within the passenger space of a motor vehicle**
Mittel zur Klimatisierung der Luft in einem Kraftfahrzeuginnenraum
Moyen pour le conditionnement d'air dans l'habitacle d'une voiture automobile

(30) Priority: 29.03.1991 IT TO910225
(43) Date of publication of application: 07.10.1992
(73) Proprietor: FIAT AUTO S.p.A., I-10135 Torino (IT)
(72) Inventor: Dal Monte, Antonio, I-00139 Roma (IT)
(74) Representative: Jorio, Paolo

(56) References cited:
- EP-A- 0 296 555
- FR-A- 2 463 366
- FR-A- 2 516 213
- FR-A- 2 571 477
- US-A- 2 277 089
- PATENT ABSTRACTS OF JAPAN vol. 13, no. 296 (M-846)(3644) 10 July 1989 & JP-A-1 085 809 (NIPPON DENSO) 30 March 1989
- PATENT ABSTRACTS OF JAPAN vol. 7, no. 68 (M-201)(1213) 19 March 1983 & JP-A-57 209 414 (NIPPON DENSO) 22 December 1982

## Description

This invention relates to means for conditioning the air within the passenger space of a motor vehicle of the type comprising substantially a pump capable of creating a flow of air, a heat exchanger which is connected to the said pump and to a plurality of air delivery pipes, each of which is capable of conveying the said air to a predetermined part of the passenger space.

The heat exchanger in such devices is provided with at least a first pipe through which passes the flow of air delivered by the pump and a second pipe through which passes a conditioning fluid in such a way as to exchange heat energy between this fluid and the air flow.

Throttling means, whose purpose is to control the cross-section of the air passage appropriately in each of the said pipes (or to shut off such passage completely) in order to obtain a distribution of the air flow leaving the heat exchanger in the various delivery pipes such that a predetermined air flow can reach every part of the passenger space into which the pipes open out, are normally provided between the heat exchanger and the abovementioned air delivery pipes.

The abovementioned throttling means normally comprise fixed or movable means of obstruction, such as deflectors, shutters and the like under the control of appropriate actuators. Such means of obstruction are known, for example, from FR-A-2 516 213.

In this way the air, which is heated or cooled by the heat exchanger as appropriate, is subdivided into a plurality of secondary flows, each of which passes through one of the delivery pipes mentioned above in a flow which is controlled from time to time in accordance with the special air conditioning requirements of the passenger space.

Air conditioning devices of the type described have some disadvantages.

First of all the throttling means referred to generate a high resistance to the passage of air, and therefore the pressure and flow of air at the ends of the longer delivery pipes may be too low and in some cases insufficient. Also flow and pressure may instead be too high at the ends of shorter delivery pipes (those opening onto the dashboard) when the abovementioned throttling means are adjusted in such a way as to fully open the flow cross-section in the abovementioned pipes.

This gives rise to troublesome draughts which are sometimes directed at the uncovered parts of the passenger's body (face and hands).

Also, in the devices described, whenever the air flow through one of the delivery pipes is varied by action on the throttling means referred to above, the flow of air through all the other pipes is also affected, with the consequence that adjustments previously made are altered.

The object of this invention is to provide means for conditioning the air within the passenger space of a motor vehicle which do not have the disadvantages mentioned above.

This object is achieved by means for conditioning the air within the passenger space of a motor vehicle according to the characterising portion of the first claim.

For a better description of the air conditioning means according to the invention a more detailed description will now be given by way of example with reference to the appended drawings in which:
Figure 1 shows a perspective and diagrammatical view of the air conditioning means according to the invention, on the basis of a first embodiment thereof,
Figures 2,3 and 4 show diagrammatical perspective views of the air conditioning means according to the invention in two further embodiments which differ from that in the previous figure.

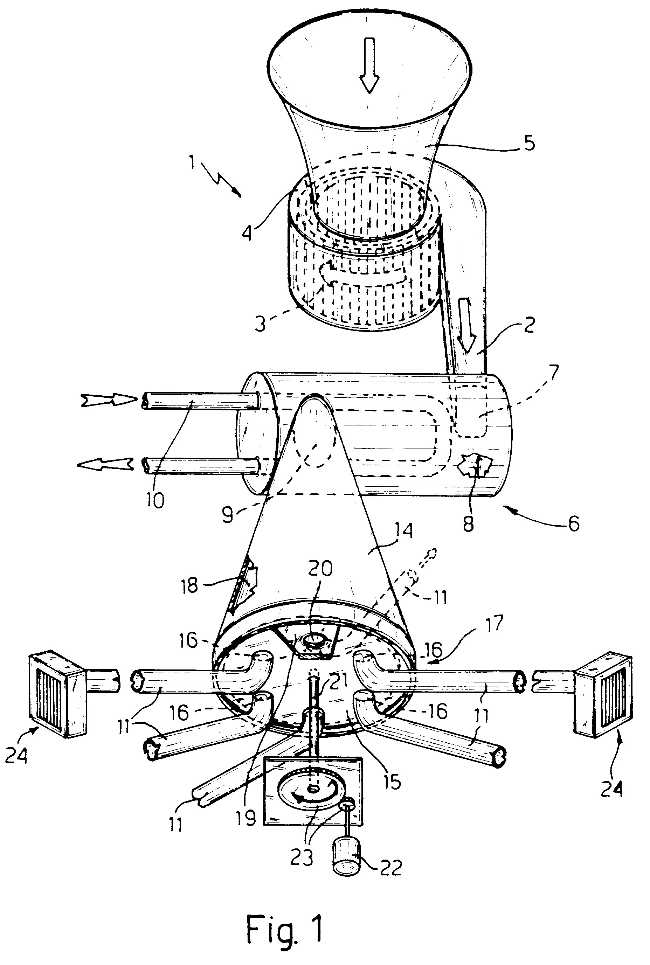

With reference firstly to Figure 1, the air conditioning means according to the invention substantially comprises a pump 1 capable of producing a flow of air within an outlet pipe 2. The said pump is provided with a rotor (of the centrifugal type, for example) which rotates within a shell 4 into which an air inlet pipe 5 opens.

The means also comprise a heat exchanger, indicated as a whole by 6, connected to pump 5 via pipe 2. This heat exchanger, which may be of any known type, is provided with an inlet 7 into which outlet pipe 2 from pump 1 opens and a pipe 8 through which the flow of air from pipe 7 can pass, together with an outlet 9. Heat exchanger 6 is also provided with a further pipe 10 through which a conditioning fluid may pass, and this is held at a suitable temperature by means of a heating or cooling unit of a type which is in itself known. In this way heat energy is exchanged within heat exchanger 6 between the conditioning fluid passing through pipe 10 and the air flow passing through pipe 8 of the heat exchanger.

Outlet 9 from heat exchanger 6 is in communication with a plurality of air delivery pipes 11, each of which can receive air at a predetermined temperature from heat exchanger 6 to deliver it to a predetermined part of the passenger space. In the case of the embodiment in Figure 1, a manifold 14 of any shape which is closed off by a front wall 15 in which are provided a plurality of holes 16, each of which forms the origin of one of pipes 11, is provided in order to place outlet 9 of heat exchanger 6 in communication with pipes 11.

In accordance with the invention, the means comprise a unit for distribution of the air, indicated as a whole by 17, which is located between heat exchanger 6 and air delivery pipes 11, and which is capable of delivering the air in the air flow entering manifold 14 into one or more of the abovementioned pipes and to switch the delivery of air between the said pipes in a cyclical manner. This distribution unit can be constructed in accordance with different embodiments illustrated in Figures 1, 2 and 3. In accordance with the embodiment illustrated in Figure 1, the distribution unit comprises manifold 14 and corresponding front wall 15 within which is provided a chamber 18 which is in communication via hole 9 with pipe 8 of heat exchanger 6 and which is bounded by substantially flat front wall 15. The distribution unit also includes a rotating disc 19 which screens front wall 15 and which is provided with at least one hole 20 which can be placed cyclically in communication with one of outlet holes 16 in the said wall. This disc is driven in any known way, for example by means of a transmission shaft 21 connected to an electric motor 22 via a transmission comprising a pair of gear wheels 23.

In the case of the embodiment illustrated, manifold 14 has a frustoconical shape and front wall 15 is circular. The axes of holes 16 may conveniently be coaxial with the axis of rotation of disc 9, on a given circumference, upon which is also positioned the axis of hole 20 of the said disc. In this way, as the disc rotates hole 20 is alternatively in communication with one of holes 16 in such a way as to provide a cyclical delivery of the air to pipes 11. Nevertheless any other arrangements of holes 16 on wall 15 is possible and any number of holes may be provided on rotating disc 19 in such a way as to provide a cyclical delivery of air to pipes 11 in accordance with any other predetermined regime. Furthermore the device may also include means 24 for reducing the flow cross-section of pipes 11, which may be provided by any convenient means comprising e.g. movable shutters located at the outlet 24 delivering the air leaving pipes 11.

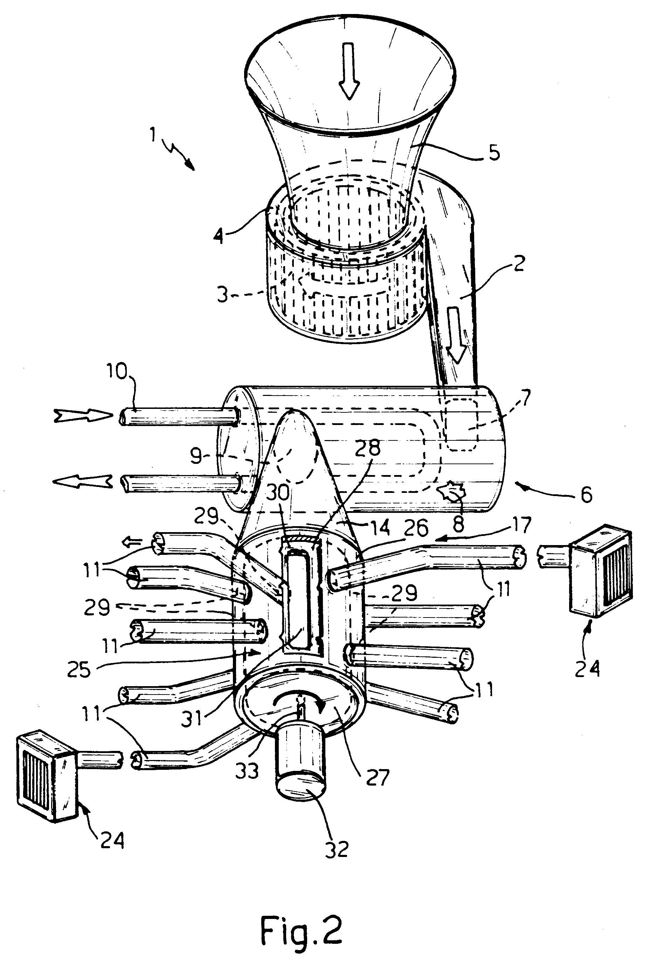

On the basis of the embodiment illustrated in Figure 2, distribution unit 17 comprises, in addition to manifold 14, a shell 25 which is bounded by a lateral cylindrical wall 26 and an end wall 27 defining within it a chamber 28. A plurality of holes 29 are provided in lateral cylindrical wall 26, and each of these is in communication with a corresponding air delivery pipe 11. An obstructing member 30 in the form of a sleeve is rotatably mounted within shell 25 and can screen cylindrical wall 26 of shell 25 and is provided with at least one perforation 31, of any appropriate shape, which can be placed cyclically in communication with one or more of holes 29 provided in wall 26. Obstructing member 30 is caused to rotate by a motor 32 via a transmission shaft 33, or any other suitable transmission.

In the case of the embodiment in Figure 2, while obstructing member 30 rotates the air from heat exchanger 6 is delivered cyclically via perforation 31 to one or more of air delivery pipes 11.

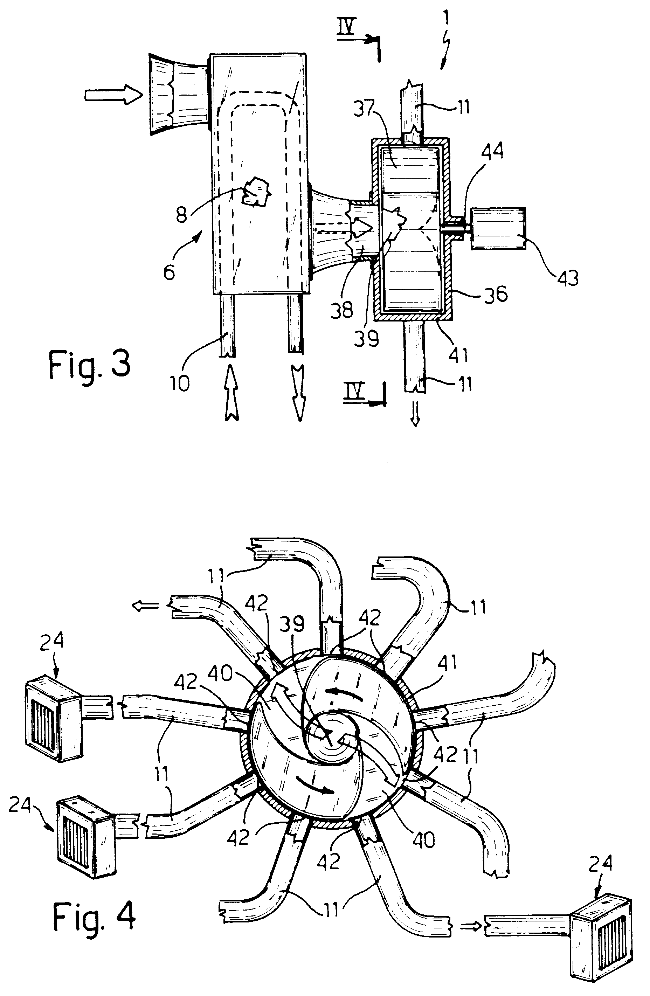

The embodiment in Figures 3 and 4 differs from that in the foregoing figures in that pump 1 is located downstream of heat exchanger 6, as will be seen clearly in Figure 3. This has substantially a cylindrical shell 36 in which a rotor 37 can rotate. Pipe 8 within heat exchanger 6 is connected via a pipe 38 to shell 36 of pump A in such a way as to provide an inflow of air to the said pump in a substantially axial direction.

Rotor 37 is provided with an axial channel 39 which is substantially opposite inlet pipe 38 and at least one channel 40 in a substantially radial direction communicating with the former (Figure 4). In the case of the embodiment illustrated in Figures 3 and 4, two channels 40 in a substantially radial direction are provided. Lateral cylindrical wall 41 of shell 36 of pump 1 is provided with outlet holes 42, each of which is in communication with a corresponding air delivery pipe 11 in such a way that channel 40 of substantially radial direction communicates cyclically with at least one of outlet holes 42 in lateral wall 41 of shell 36 to feed air to the said hole.

Rotor 37 is rotated by an electric motor 43 via a transmission shaft 44, or by any other type of transmission.

In the case of the embodiment in Figures 3 and 4, rotor 37 of pump 5, in addition to having the function of causing negative pressure within pipes 38 and 8 and inlet 5 to create a direct flow of air within shell 36 of the said pump, also acts as an obstructing member for distribution unit 17. In fact because the surface which laterally bounds rotor 37 is substantially opposite lateral wall 41 of shell 36, each channel 40 of substantially radial direction communicates cyclically with delivery pipes 11.

In accordance with the invention air distribution unit 17 conveniently comprises means to vary the frequency of the cyclic variation in the delivery of air to pipes 11. Because the frequency of the aforesaid cyclic variation is achieved simply by varying the speed of rotation of rotating disc 19 (Figure 1), obstructing member 30 (Figure 2) or rotor 37 of pump 1 (Figure 3), the said means for altering the frequency of the cyclic variation in the air feed may simply comprise a variable speed electric motor (22, 32, 43) or a suitable transmission located downstream of the said motor which provides a continuous variation in the speed of rotation of shafts 21, 33, 44.

It has also been found that, with the object of obtaining better results with the means according to the invention, the frequency of the cyclical variation in the air feed is preferably less than 100 cycles per minute.

It is therefore obvious that with the air conditioning means according to the invention all parts of the passenger space into which the ends of air delivery pipes 11 open will be simultaneously supplied with flows of air whose flow and pressure varies cyclically, consequently generating continuous turbulence which prevents the formation of draughts and avoids the occurrence of excessively hot or excessively cold points. Also the flow of air delivered to each of the abovementioned parts may be adjusted by suitably choosing the dimensions and relative location of holes 16 and 20 (Figure 1) in distribution unit 17 (or perforations 31 and holes 29 in the case of the embodiment in Figure 2, or again radial channels 40 and holes 42 in the embodiment in Figure 3).

The resistance encountered by the air on passing through distribution unit 17 and delivery pipes 11 is very low, unlike the situation in previous devices, which because of the existence of throttling means comprising deflectors and shutters instead have appreciably high resistances.

Finally the strength of the heating or cooling action provided by the air conditioning means according to the invention may also be varied by adjusting the frequency of the cyclical variation in the air supply. Thus whenever the delivery of air through one of delivery pipes 11 is prevented by closure of corresponding outlet 24, the flow of air is not appreciably influenced in the parts into which other delivery pipes 11 open out.

It is clear that modifications and variants may be made to the embodiments described in this invention without going beyond its scope as defined by the claims.

## Claims

1. Means for conditioning the air within the passenger space of a motor vehicle, comprising a pump (1) capable of creating a flow of air, a beat exchanger (6) connected to said pump and provided with at least a first pipe (8) through which said flow of air may pass and a second pipe (10) through which a conditioning fluid may pass, which is designed to exchange heat energy between said conditioning fluid and said flow of air, and a plurality of air delivery pipes (11) in communication with said heat exchanger, each of which can receive air from said flow of air to deliver it to a predetermined part of said passenger space; said means for conditioning the air further comprising an air distribution unit (17), which is capable of delivering air from said flow of air into one or more of said delivery pipes (11) and to switch the supply of air between said pipes in a cyclical manner; **characterized** in that said air distribution unit (17) is located between said beat exchanger (6) and said delivery pipes (11) and comprises a rotor (19;30;37) and means (22;32;43) for continuously rotating said rotor within a casing (18;28;36) into which said delivery pipes (11) debauch; said rotor (19;30;37) being provided with at least one through communication duct (20;31;40) in permanent communication with said heat exchanger (6) for selectively connecting the latter to each of said pipes (11) each time that said duct (20;40) faces said pipes (11) as a consequence of the continuous rotation of said rotor (19;30;37).

2. Air conditioning means as claimed in Claim 1, **characterized** in that said means (22;32;43) for continuously rotating said rotor consist of a motor (22;32;43) having a variable speed of rotation, so as to vary the frequency of said cyclical variation in the air supply.

3. Air conditioning means as claimed in Claim 1 or 2, wherein the speed of rotation of said rotor (19;30;37) is such that the cyclical variation in the air supply provided by said air distribution unit (17) has a frequency of less than one hundred cycles per minute.

4. Air conditioning means according to claims 1, 2 or 3, characterised in that the said distribution unit (17) comprises a chamber (18) which communicates with the said first pipe (8) of the said heat exchanger (6) and is bounded by a flat front wall (5) in which are provided outlet holes (16) each of which is in communication with one of the said air delivery pipes (11) and a rotating disc (19) capable of screening off the said front wall (15) and provided with at least one hole (20) capable of being placed cyclically in communication with one or more of the said outlet holes (16), the said rotating disc being driven by a motor (22) via a transmission (21).

5. Air conditioning means according to one of claims 1, 2 or 3, characterised in that the said distribution unit (17) comprises a chamber (28) which is in communication with the said first pipe (8) in the said heat exchanger (16) and is bounded by a cylindrical wall (26) in which are provided outlet holes (29) each of which is in communication with one of the said air delivery pipes (11) and an obstructing member in the form of a sleeve (30) rotating within the said chamber and provided with a cylindrical wall which is capable of screening the said cylindrical wall (26) of the said chamber (28), and in which is provided at least one perforation (31) capable of being placed cyclically in communication with one or more of the said outlet holes (29), the said obstructing member (30) being driven by a motor (32) via a transmission (33).

6. Air conditioning means according to claims 1, 2 or 3, characterised in that the said pump (1) is located downstream of the said heat exchanger (6) to receive the said flow of air from it, and comprises a shell (36) within which there rotates a centrifugal rotor (37) bounded by a substantially cylindrical outer lateral surface, the said rotor being provided with an axial channel (39) for the said flow of air which is in communication with the said heat exchanger (6) and at least one channel (40) in a substantially radial direction, the said shell (36) of the pump being provided with a cylindrical lateral wall (41) which is located around the said lateral cylindrical surface of the said rotor (37) and which is provided with outlet holes (42) each of which is in communication with one of the said air delivery pipes (11) in such a way that the said channel (40) having a substantially radial direction of the said rotor (37) communicates cyclically with at least one of the said outlet holes (42) of the lateral wall (41) of the shell (36) in such a way as to deliver air cyclically to the said holes.

7. Air conditioning means as claimed in Claim 6, wherein said pump (1) comprises means (43;44) to vary the rotation speed of said rotor (37) of said pump.

8. Air conditioning means according to Claims 6 or 7, wherein said rotor (37) comprised a pair of said channels (40) having a substantially radial direction, said rotor being driven by a motor (43) via a transmission (44).

## Patentansprüche

1. Mittel zur Aufbereitung von Luft innerhalb des Fahrgastraums eines Motorfahrzeugs mit einer Pumpe (1) die einen Luftstrom erzeugt, einem Wärmetauscher (6) der mit der Pumpe verbunden und mit wenigstens einem ersten Rohr (8) versehen ist durch welches der Luftstrom geführt werden kann und mit einem zweiten Rohr (10) durch welches ein Aufbereitungsfluid geführt werden kann, wobei Wärmeenergie zwischen dem Aufbereitungsfluid und dem Luftstrom ausgetauscht wird, und mit einer Vielzahl von Luftauslaßrohren (11) die mit dem Wärmetauscher kommunizieren, von denen jedes Luft aus dem Luftstrom empfängt um diese an einen vorbestimmten Bereich des Fahrgastraums zu bringen, und mit einer Luftverteileinheit (17) welche die Luft aus dem Luftstrom in eine oder mehrere der Auslaßrohre (11) verteilt und zum Umschalten der Luftversorgung zwischen Rohren in zyklischer Weise, **dadurch gekennzeichnet**, daß die Luftverteileinheit (17) zwischen dem Wärmetauscher (6) und den Auslaßrohren (11) sitzt und einen Rotor (19;30;37) enthält und Mittel (22;32,43) zum stufenlosen Drehantrieb des Rotors innerhalb eines Gehäuses (18;28;36), in welches die Auslaßrohre (11) führen, wobei der Rotor (19;30;37) mit wenigstens einer ersten durchgehenden Kommunikationsverbindung (20;31;40) in laufender Verbindung mit dem Wärmetauscher (6) steht zur ausgewählten Verbindung des Wärmetauschers mit jedem der besagten Rohre (11) immer wenn die Kommunikationsverbindung (20;40) den Rohren (11) infolge der stufenlosen Rotation des Rotors (19;30;37) gegenübersteht.

2. Luftaufbereitungseinrichtung nach Anspruch 1, **dadurch gekennzeichnet**, daß die Mittel (22;32;43) zum stufenlosen Antrieb des Rotors einen Motor (22;32;43) mit variabler Drehzahl umfassen um die Frequenz der zyklischen Variation in der Luftversorgung zu verändern.

3. Luftaufbereitungseinrichtung nach Anspruch 1 oder 2, **dadurch gekennzeichnet**, daß die Drehgeschwindigkeit des Rotors (19;30;37) derart ist, daß die zyklische Variation der Luftversorgung durch die Luftverteileinheit (17) eine Frequenz von weniger als 100 Zyklen pro Minute hat.

4. Luftaufbereitungseinrichtung nach einem der Ansprüche 1,2 oder 3, **dadurch gekennzeichnet**, daß die Verteileinheit (17) eine Kammer (18) enthält welche mit dem ersten Rohr (8) des Wärmetauschers (6) kommuniziert und durch eine flache Vorderwand (15) begrenzt wird in welcher Auslaßlöcher vorgesehen sind, von denen jedes mit einem der Luftauslaßrohre (11) kommuniziert, sowie mit einer rotierenden Scheibe (19) welche die Vorderwand (15) verblendet und mit wenigstens einem Loch (20) ausgestattet ist welches zyklisch kommunizierend mit einem oder mehreren der Auslaßlöcher (16) zur Deckung gebracht wird, wobei die rotierende Scheibe durch einen Motor (22) über eine Transmission (21) angetrieben ist.

5. Luftaufbereitungseinrichtung nach einem der Ansprüche 1, 2 oder 3, **dadurch gekennzeichnet**, daß die Verteileinrichtung (17) eine Kammer (28) enthält die mit einem ersten Rohr (8) im Wärmetauscher (16) kommuniziert und durch eine zylindrische Wand (26) begrenzt wird in welcher Auslaßlöcher (29) vorgesehen sind, von denen jedes mit einem der Luftauslaßrohre (11) kommuniziert und einem Sperrelement in Form einer Hülse (30) innerhalb der besagten Kammer rotierend und mit einer zylindrischen Wand welche die zylindrische Wand (26) der Kammer (28) verblendet und in welcher wenigstens ein Durchbruch (31) vorgesehen ist, der zyklisch in kommunizierende Position mit einem oder mehreren der Auslaßlöcher (29) gebracht wird, wobei die Sperreinrichtung (30) durch einen Motor (32) über eine Transmission (33) angetrieben ist.

6. Luftaufbereitungseinrichtung nach einem der Ansprüche 1,2 oder 3, **dadurch gekennzeichnet**, daß die Pumpe stromabwärts des Wärmetauschers (6) angeordnet ist um den Luftstrom von diesem zu erhalten und ein Gehäuse (36) enthält, innerhalb dessen ein Zentrifigualrotor (37) sich dreht, und welcher durch eine im wesentlichen zylindrische äußere Seitenfläche begrenzt wird, wobei der Rotor einen Axialkanal (39) für den Luftstrom aufweist, der mit dem Wärmetauscher (6) kommuniziert und mit wenigstens einem Kanal (40) in einer im wesentlichen radialen Richtung, wobei das Gehäuse (36) der Pumpe mit einer zylindrischen Seitenwand (41) ausgestattet ist, die um die zylindrische Seitenfläche des Rotors (37) herum verläuft und die mit Auslaßöffnungen (42) versehen ist, von denen jede mit einem der Luftauslaßrohre (11) derart kommuniziert, daß der Kanal (40) mit im wesentlichen radialer Richtung bezüglich des Rotors (37) zyklisch mit wenigstens einem der Auslaßlöcher (42) der seitlichen Wand (41) des Gehäuses (36) derart kommuniziert, daß die Luft zyklisch zu den Löchern ausgelassen wird.

7. Luftaufbereitungseinrichtung nach Anspruch 6, **dadurch gekennzeichnet**, daß die Pumpe (1) Mittel (43,44) zur Veränderung der Drehzahl des Rotors (37) der Pumpe enthält.

8. Luftaufbereitungseinrichtung nach Anspruch 6 oder 7, **dadurch gekennzeichnet**, daß der Rotor (37) ein Paar von Kanälen (40) umfaßt, die eine im wesentlichen radiale Richtung haben, wobei der Rotor über eine Transmission (44) durch den Motor (43) angetrieben ist.

## Revendications

1. Dispositif de climatisation de l'habitacle d'un véhicule automobile, comprenant une pompe (1) pouvant engendrer une circulation d'air, un échangeur de chaleur (6) connecté à la dite pompe et comportant au moins un premier tube (8) dans lequel ladite circulation d'air peut passer et un deuxième tube (10) dans lequel un fluide de conditionnement peut passer, ledit échangeur étant prévu pour échanger une énergie thermique entre ledit fluide de conditionnement et ledit flux d'air en circulation, et une pluralité de tubes de distribution d'air (11) en communication avec ledit échangeur de chaleur et dont chacun peut recevoir de l'air provenant dudit flux d'air et le conduire à un endroit prédéterminé dudit habitacle, ledit dispositif de climatisation comprenant en outre une unité de distribution d'air (17) qui peut distribuer l'air dudit flux d'air vers un ou plusieurs desdits tubes de distribution (11) et commuter la fourniture d'air entre lesdits tubes d'une manière cyclique ; caractérisé en ce que ladite unité de distribution d'air (17) est placée entre ledit échangeur de chaleur (6) et lesdits tubes de distribution (11) et elle comprend un rotor (19;30;36) et des moyens (22;32;43) pour la mise en rotation continue dudit rotor à l'intérieur d'une enveloppe (18;28;36) dans laquelle débouchent les dits tubes de distribution (11), ledit rotor (19;30;37) comportant un conduit de communication traversant (20;31;40) en communication permanente avec ledit échangeur de chaleur (6) pour connecter sélectivement ce dernier à chacun desdits tubes (11) chaque fois que ledit conduit (20;40) est en face des dits tubes (11) comme conséquence de la rotation continue dudit rotor (19;30;37).

2. Dispositif de climatisation selon la revendication 1,caractérisé en ce que lesdits moyens (22;32;43) pour la mise en rotation continue dudit rotor consistent en un moteur (22;32;43) ayant une vitesse de rotation variable, afin de faire varier la fréquence de ladite variation cyclique de la fourniture d'air.

3. Dispositif de climatisation suivant la revendication 1 ou 2, dans lequel la vitesse de rotation dudit rotor (19;30;37)est telle que la variation cyclique de la fourniture d'air effectuée par ladite unité de distribution d'air (17) a une fréquence inférieure à 100 cycles par minute.

4. Dispositif de climatisation suivant les revendications 1,2 ou 3, caractérisé en ce que ladite unité de distribution (17) comprend une chambre (18), qui communique avec ledit premier tube (8) dudit échangeur de chaleur (6) et qui est délimitée par une paroi avant plane (5) dans laquelle sont prévus des trous de sortie (16) dont chacun est en communication avec un desdits tubes de distribution d'air (11), et un disque rotatif (19) pouvant masquer ladite paroi avant (15) et comportant au moins un trou (20) qui peut être placé cycliquement en communication avec un ou plusieurs desdits trous de sortie (16), ledit disque rotatif étant entraîné par un moteur (22) par l'intermédiaire d'une transmission (21).

5. Dispositif de climatisation suivant une des revendications 1,2 ou 3, caractérisé en ce que ladite unité de distribution (17) comprend une chambre (28), qui est en communication avec ledit premier tube (8) dudit échangeur de chaleur (16) et qui est délimitée par une paroi cylindrique (26) dans laquelle sont prévus des trous de sortie (29) dont chacun est en communication avec un desdits tubes de distribution d'air (11), et un élément d'obturation sous la forme d'un manchon (30) tournant à l'intérieur de ladite chambre et comportant une paroi cylindrique qui peut masquer ladite paroi cylindrique (26) de ladite chambre (28) et dans laquelle est prévue au moins une perforation (31) pouvant être placée cycliquement en communication avec un ou plusieurs des dits trous de sortie (29), ledit élément d'obturation (30) étant entraîné par un moteur (32) par l'intermédiaire d'une transmission ( 33).

6. Dispositif de climatisation suivant les revendications 1,2 ou 3, caractérisé en ce que ladite pompe (1) est située en aval dudit échangeur de chaleur (6) pour recevoir ledit flux d'air venant de celui-ci, et elle comprend une volute (36) dans laquelle tourne un rotor centrifuge (37) délimité par une surface latérale extérieure sensiblement cylindrique, ledit rotor comportant un canal axial (39) pour ledit flux d'air qui est en communication avec ledit échangeur de chaleur (6) et au moins un canal (40) dans une direction sensiblement radiale, ladite volute (36) de la pompe ayant une paroi latérale cylindrique (41) qui est située autour de la dite surface cylindrique latérale dudit rotor (37) et qui comporte des trous de sortie (42) dont chacun est en communication avec un desdits tubes de distribution d'air (11) d'une manière telle que ledit canal (40) de direction sensiblement radiale dudit rotor (37) communique cycliquement avec au moins un desdits trous de sortie (42) de la paroi latérale (41) de la volute (36) de manière à fournir l'air cycliquement auxdits trous.

7. Dispositif de climatisation suivant la revendication 6, dans lequel ladite pompe (1) comprend des moyens (43;44) de variation de la vitesse de rotation dudit rotor (37) de ladite pompe.

8. Dispositif de climatisation suivant les revendications 6 ou 7, dans lequel ledit rotor (37) comprend deux dits canaux (40) de direction sensiblement radiale, ledit rotor étant entraîné par un moteur (43) par l'intermédiaire d'une transmission (44).
